(19) Europäisches Patentamt
European Patent Office
Office européen des brevets

(11) EP 4 628 555 A1

(12) **EUROPEAN PATENT APPLICATION**
published in accordance with Art. 153(4) EPC

(43) Date of publication:
**08.10.2025 Bulletin 2025/41**

(21) Application number: **23897123.8**

(22) Date of filing: **25.07.2023**

(51) International Patent Classification (IPC):
***C09D 133/14** (2006.01)* ***C09D 7/63** (2018.01)*
***C09D 7/65** (2018.01)* ***C09D 175/04** (2006.01)*

(52) Cooperative Patent Classification (CPC):
**C09D 7/65; C08F 220/14; C08F 220/1804; C08F 220/20; C08G 18/3271; C08G 18/4018; C08G 18/4027; C08G 18/4063; C08G 18/4202; C08G 18/4219; C08G 18/4241; C08G 18/4277; C08G 18/4829; C08G 18/544; C08G 18/6254;**
(Cont.)

(86) International application number:
**PCT/JP2023/027201**

(87) International publication number:
**WO 2024/116463 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2022 JP 2022191984**

(71) Applicant: **Nippon Paint Automotive Coatings Co., Ltd.**
**Hirakata-shi, Osaka 573-1153 (JP)**

(72) Inventors:
- **HORII, Takeshi**
  **Hirakata-shi, Osaka 573-1153 (JP)**
- **KUZUHARA, Mitsuhiro**
  **Hirakata-shi, Osaka 573-1153 (JP)**
- **SAKAMOTO, Taiga**
  **Hirakata-shi, Osaka 573-1153 (JP)**
- **SUMITOMO, Kenta**
  **Hirakata-shi, Osaka 573-1153 (JP)**

(74) Representative: **Mewburn Ellis LLP**
**Aurora Building**
**Counterslip**
**Bristol BS1 6BX (GB)**

(54) **TWO-COMPONENT CLEAR COATING COMPOSITION**

(57) Provided is a two-pack type clear coating composition capable of forming a clear coating film that is easily sanded while being superior in scratch resistance. A two-pack type clear coating composition including a base agent (A) and a curing agent (B), wherein the base agent (A) includes a first hydroxy group-containing acrylic resin having a hydroxyl value of 120 mg KOH/g or less and a second hydroxy group-containing acrylic resin having a hydroxyl value of more than 120 mg KOH/g, the curing agent (B) includes an isocyanate compound, and a coefficient of dynamic friction of a surface of a coating film obtained from the two-pack type clear coating composition is 0.35 or more under a load of 50 g.

Fig. 1

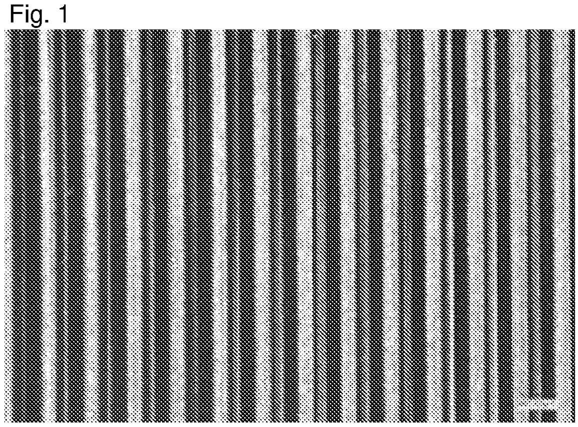

EP 4 628 555 A1

(52) Cooperative Patent Classification (CPC): (Cont.)
**C08G 18/6688; C08G 18/792; C08G 18/80;**
**C09D 7/63; C09D 133/064; C09D 133/066;**
**C09D 133/14; C09D 183/04;** C09D 7/80

## Description

### TECHNICAL FIELD

The present invention relates to a two-pack type clear coating composition.

### BACKGROUND ART

In repair coating of automobiles, an existing coating film is peeled off by sanding, and then a coating material for repair is applied. Coating films formed by repair generally tend to have lowered physical properties. Therefore, for example, Patent Literature 1 teaches a clear coating composition for repair that is hard to be sanded, is superior in resistance to uneven after-tack, and can form a coating film superior in finish property.

### CITATIONS LIST

### PATENT LITERATURE

Patent Literature 1: JP 4532625 B2

### SUMMARY OF INVENTION

### TECHNICAL PROBLEMS

Sanding of a coating film can be performed for removing foreign matters also in an automobile manufacture line. At this time, a part of the coating film is shaved and removed together with the foreign matters with a sanding material such as sanding paper or grindstone. In order to remove foreign matters without stopping the manufacture line, it is important that the coating film is easily sanded. On the other hand, it is required that no scratch be generated during use.

An object of the present invention is to provide a two-pack type clear coating composition capable of forming a clear coating film that is easily sanded while being superior in scratch resistance.

### SOLUTIONS TO PROBLEMS

The present invention provides the following modes [1] to [6].

[1] A two-pack type clear coating composition comprising a base agent (A) and a curing agent (B), wherein

the base agent (A) contains:

a first hydroxy group-containing acrylic resin having a hydroxyl value of 120 mg KOH/g or less; and
a second hydroxy group-containing acrylic resin having a hydroxyl value of more than 120 mg KOH/g,

the curing agent (B) contains:

an isocyanate compound, and
a coefficient of dynamic friction of a surface of a coating film obtained from the two-pack type clear coating composition is 0.35 or more under a load of 50 g.

[2] The two-pack type clear coating composition according to [1], wherein a ratio (W1/W2) of a content W1 of the first hydroxy group-containing acrylic resin to a content W2 of the second hydroxy group-containing acrylic resin is 70/30 to 30/70.
[3] The two-pack type clear coating composition according to [1] or [2], further comprising an acrylic-silicone copolymer having a main chain formed of carbon-carbon linkages.
[4] The two-pack type clear coating composition according to [3], wherein a content of the acrylic-silicone copolymer is 0.1 parts by mass or more and 0.5 parts by mass or less based on 100 parts by mass of a total solid content of the base agent (A) and the curing agent (B).
[5] The two-pack type clear coating composition according to [3] or [4], further comprising a silicone compound having a main chain formed of siloxane linkages.
[6] The two-pack type clear coating composition according to [5], wherein a ratio (W3/W4) of a content W3 of the

acrylic-silicone copolymer to a content W4 of the silicone compound is 99/1 to 80/20.

ADVANTAGEOUS EFFECTS OF INVENTION

In accordance with the present invention, there is provided a two-pack type clear coating composition capable of forming a clear coating film that is easily sanded while being superior in scratch resistance.

BRIEF DESCRIPTION OF DRAWINGS

FIG. 1 is an image (× 200 magnifications) taken after a friction test of a surface of the coating film prepared using the coating material of Example 1.

FIG. 2 is an image (× 200 magnifications) taken after a friction test of a surface of the coating film prepared using the coating material of Comparative Example 1.

DESCRIPTION OF EMBODIMENTS

[Two-pack type clear coating composition]

A two-pack type clear coating composition (hereinafter, sometimes simply referred to as "clear coating composition") according to the present disclosure contains a base agent (A) and a curing agent (B). The clear coating composition may be either water-borne or solvent-based. The clear coating composition may be a solvent-based composition.

The water-borne coating composition contains water as a solvent. In the water-borne coating composition, the proportion of water in the solvent is 20% by mass or more, and may be 50% by mass or more, may be 70% by mass or more, or may be 100% by mass. The solvent-based coating composition contains an organic solvent (also referred to as nonaqueous solvent) as a solvent. In the solvent-based coating composition, the proportion of the organic solvent in the solvent is 20% by mass or more, and may be 50% by mass or more, may be 70% by mass or more, or may be 100% by mass.

The base agent (A) contains first and second hydroxy group-containing acrylic resins differing from each other in hydroxyl value as coating film forming components. The curing agent (B) contains a polyisocyanate compound as a coating film forming component. A crosslinked structure is formed via reactions of the hydroxy group-containing acrylic resins with the polyisocyanate compound to afford a coating film.

Hereinafter, the first and second hydroxy group-containing acrylic resins and other coating film forming components containing a hydroxy group (excluding the curing agent) may be collectively referred to as "hydroxy group-containing component".

The ease of slipping of a coating film surface greatly affects the sandability. The coefficient of dynamic friction of a surface of a coating film (clear coating film) obtained from the clear coating composition according to the present disclosure is 0.35 or more under a load of 50 g. The coefficient of dynamic friction is one of indices of resistance to slipping, and the larger the numerical value thereof, the more difficult it is for slipping to occur. When the coefficient of dynamic friction at a load of 50 g is 0.35 or more, the surface of the coating film is hard to slip, and the coating film is easily sanded with a sanding material (for example, sanding paper or grindstone). In other words, when the coefficient of dynamic friction at a load of 50 g is 0.35 or more, the surface of the coating film is hard to slip to such an extent that the coating film is easily sanded with a sanding material. Hereinafter, the characteristic of being easily sanded is referred to as ease in sanding.

Furthermore, owing to the use of the first hydroxy group-containing acrylic resin having a hydroxyl value of 120 mg KOH/g or less, the crosslinking density is kept low, and the clear coating film is more easily sanded.

On the other hand, a certain degree of crosslinking density is secured by the second hydroxy group-containing acrylic resin having a hydroxyl value of more than 120 mg KOH/g. Therefore, an excessive decrease in the strength of the clear coating film is inhibited, and for example, scratches due to a car wash brush are less likely to be formed. That is, superior scratch resistance is obtained.

The coefficient of dynamic friction is determined by a point contact method called ball-on-plate using a steel ball jig having a diameter of 2 mm at a load of 50 g by using a friction analyzer of Bowden type (horizontal linear reciprocating motion system) (for example, an automatic friction abrasion analyzer "TS-501" manufactured by Kyowa Interface Science Co., Ltd.). The coefficient of dynamic friction of the clear coating film may be 0.36 or more, and may be 0.37 or more. The coefficient of dynamic friction of the clear coating film may be 1.0 or less, and may be 0.9 or less.

The ratio (W1/W2) of the solid content W1 of the first hydroxy group-containing acrylic resin to the solid content W2 of the second hydroxy group-containing acrylic resin may be 70/30 to 30/70. This makes it easier to achieve both the

ease in sanding and the scratch resistance. The ratio (W1/W2) may be 60/40 to 40/60, and may be 55/45 to 45/55.

The solid component concentration of the clear coating composition is, for example, 30% by mass or more and 70% by mass or less. The solid component concentration of the clear coating composition may be 40% by mass or more, and may be 50% by mass or more. The solid component concentration of the clear coating composition may be 65% by mass or less, and may be 60% by mass or less. The solid component of the clear coating composition is all components except volatile components such as a solvent.

<Base agent (A)>

The base agent (A) contains first and second hydroxy group-containing acrylic resins.

<<Hydroxy group-containing acrylic resin>>

The hydroxy group-containing acrylic resins are resins to serve as a base of the clear coating film (coating film forming components). The hydroxy group-containing acrylic resins react with a polyisocyanate compound to form a crosslinked structure.

The hydroxy group-containing acrylic resins each have a plurality of acryloyl groups and a plurality of hydroxy groups in one molecule. The "acrylic resin" is obtained by polymerizing at least one monomer among acrylic acid and esters thereof and methacrylic acid and esters thereof.

(First hydroxy group-containing acrylic resin)

The first hydroxy group-containing acrylic resin has a hydroxyl value of 120 mg KOH/g or less. As a result, the crosslinking density can be kept low, and the ease in sanding of the clear coating film is improved. The base agent (A) may contain a plurality of first hydroxy group-containing acrylic resins each having a hydroxyl value of 120 mg KOH/g or less.

The hydroxyl value of the first hydroxy group-containing acrylic resin may be 115 mg KOH/g or less, and may be 110 mg KOH/g or less. The hydroxyl value of the first hydroxy group-containing acrylic resin may be 60 mg KOH/g or more, and may be 80 mg KOH/g or more.

The hydroxyl value can be determined by a neutralization titration method using an aqueous potassium hydroxide solution described in JIS K 0070.

The weight average molecular weight of the first hydroxy group-containing acrylic resin may be 6000 or more and 9000 or less. This makes it possible to further improve the ease in sanding of the clear coating film. The weight average molecular weight of the first hydroxy group-containing acrylic resin may be 6500 or more, and may be 7000 or more. The weight average molecular weight of the first hydroxy group-containing acrylic resin may be 8800 or less, and may be 8700 or less.

The weight average molecular weight can be calculated based on the molecular weight of standard polystyrene from a chromatogram measured with a gel permeation chromatograph. As the gel permeation chromatograph, for example, HLC-8200 (manufactured by Tosoh Corporation) is used. The measurement conditions using this are as follows.

Column: TSgel Super Multipore HZ-M, 3 columns
Developing solvent: tetrahydrofuran
Column inlet oven: 40°C
Flow rate: 0.35 ml
Detector: differential refractive index detector (RI)
Standard polystyrene: PS oligomer kit manufactured by Tosoh Corporation

The glass transition temperature (Tg) of the first hydroxy group-containing acrylic resin may be 0°C or higher and 100°C or lower. Thanks to that the Tg is 0°C or higher, the stain resistance, the scratch resistance, and the hardness of the clear coating film are easily improved. Thanks to that the Tg is 100°C or lower, the quick-drying property of the clear coating composition is easily improved. The Tg of the first hydroxy group-containing acrylic resin may be 5°C or higher, and may be 10°C or higher. The Tg of the first hydroxy group-containing acrylic resin may be 95°C or lower, and may be 90°C or lower.

The glass transition temperature (Tg) is determined by the following method using a differential scanning calorimeter (DSC). The first hydroxy group-containing acrylic resin is subjected to (step 1) a step of raising the temperature from 20°C to 150°C at a temperature raising rate of 10°C/min, (step 2) a step of lowering the temperature from 150°C to -50°C at a temperature lowering rate of 10°C/min after step 1, and (step 3) a step of raising the temperature from -50°C to 150°C at a temperature raising rate of 10°C/min after step 2. The value obtained from the chart at the time of the temperature rise in step 3 is the Tg of the first hydroxy group-containing acrylic resin. As the DSC, for example, a thermal analyzer SSC5200 (manufactured by Seiko Instruments & Electronics Ltd.) is used.

The acid value of the first hydroxy group-containing acrylic resin may be 2 mg KOH/g or more and 30 mg KOH/g or less. As a result, the smoothness of the clear coating film tends to be improved. Furthermore, when the clear coating composition is applied to another uncured coating film, mix of phases is easily inhibited from occurring. The acid value of the first hydroxy group-containing acrylic resin may be 3 mg KOH/g or more. The acid value of the first hydroxy group-containing acrylic resin may be 20 mg KOH/g or less, and may be 15 mg KOH/g or less. The acid value can be determined by the same method as that used for the hydroxyl value.

The solid content of the first hydroxy group-containing acrylic resin accounting for in 100 parts by mass of the total solid content of the hydroxy group-containing components may be 30 parts by mass or more and 70 parts by mass or less. This makes it possible to further improve the ease in sanding of the clear coating film. The solid content of the first hydroxy group-containing acrylic resin may be 40 parts by mass or more, and may be 45 parts by mass or more. The solid content of the first hydroxy group-containing acrylic resin may be 60 parts by mass or less, and may be 55 parts by mass or less.

Examples of the starting monomer of the first hydroxy group-containing acrylic resin include acrylic acid hydroxy esters such as 2-hydroxyethyl acrylate and 4-hydroxybutyl acrylate; and methacrylic acid hydroxy esters such as 2-hydroxyethyl methacrylate and 4-hydroxybutyl methacrylate. These are used singly or two or more of them are used in combination. A commercially available hydroxy group-containing acrylic resin may be used.

As necessary, acrylic acid; acrylic acid esters such as methyl acrylate, butyl acrylate, isobutyl acrylate, t-butyl acrylate, 2-ethylhexyl acrylate, lauryl acrylate, and isobornyl acrylate; methacrylic acid; methacrylic acid esters such as methyl methacrylate, butyl methacrylate, isobutyl methacrylate, t-butyl methacrylate, 2-ethylhexyl methacrylate, lauryl methacrylate, and isobornyl methacrylate; ethylenically unsaturated monomers having an aromatic ring such as styrene; and so on may be used. These are used singly or two or more of them are used in combination.

(Second hydroxy group-containing acrylic resin)

The second hydroxy group-containing acrylic resin has a hydroxyl value of more than 120 mg KOH/g. Thanks to the second hydroxy group-containing acrylic resin, a certain degree of crosslinking density is secured and superior scratch resistance can be obtained. The base agent (A) may contain a plurality of second hydroxy group-containing acrylic resins each having a hydroxyl value of more than 120 mg KOH/g.

The hydroxyl value of the second hydroxy group-containing acrylic resin may be 130 mg KOH/g or more, and may be 140 mg KOH/g or more. The hydroxyl value of the second hydroxy group-containing acrylic resin may be 300 mg KOH/g or less, may be 250 mg KOH/g or less, and may be 200 mg KOH/g or less.

The solid content of the second hydroxy group-containing acrylic resin accounting for in 100 parts by mass of the total solid content of the hydroxy group-containing components may be 30 parts by mass or more and 70 parts by mass or less. This makes it possible to further improve the scratch resistance of the clear coating film. The solid content of the second hydroxy group-containing acrylic resin may be 40 parts by mass or more, and may be 45 parts by mass or more. The solid content of the second hydroxy group-containing acrylic resin may be 60 parts by mass or less, and may be 55 parts by mass or less.

The weight average molecular weight, Tg, acid value, and starting monomer of the second hydroxy group-containing acrylic resin may be the same as those of the first hydroxy group-containing acrylic resin.

<<Other hydroxy group-containing component>>

The base agent (A) may contain another hydroxy group-containing component. This makes it easy to adjust the crosslinking density. Examples of the other hydroxy group-containing component include a hydroxy group-containing polyester resin, a polycarbonate polyol resin, a polyether polyol resin, and a polycaprolactone polyol resin.

The hydroxyl value of the other hydroxy group-containing components is, for example, 250 mg KOH/g or more and 500 mg KOH/g or less.

The solid content of the other hydroxy group-containing component is within a range in which the effect of the clear coating composition according to the present disclosure is not impaired. The solid content of the other hydroxy group-containing component accounting for in 100 parts by mass of the total solid content of the hydroxy group-containing components may be 10 parts by mass or less, may be 5 parts by mass or less, and may be 2 parts by mass or less.

<<Solvent>>

The base agent (A) may contain a solvent. The solvent may be either water or a nonaqueous solvent.

Examples of the nonaqueous solvent include aliphatic or alicyclic hydrocarbon-based solvents such as cyclohexane, methylcyclohexane, cycloheptane, methylcycloheptane, and mineral spirit; ketone-based organic solvents such as acetone, acetylacetone, methyl ethyl ketone, methyl i-butyl ketone, methyl amyl ketone, and cyclohexanone; aromatic hydrocarbon-based organic solvents such as benzene, toluene, ethylbenzene, propylbenzene, t-butylbenzene,

o-xylene, m-xylene, p-xylene, tetralin, and decalin; ester-based organic solvents such as methyl acetate, ethyl acetate, butyl acetate, amyl acetate, ethyl propionate, methyl propionate, and ethyl 3-ethoxypropionate; cellosolve-based organic solvents such as methyl cellosolve, ethyl cellosolve, n-propyl cellosolve, i-propyl cellosolve, n-butyl cellosolve, i-butyl cellosolve, i-amyl cellosolve, phenyl cellosolve, and benzyl cellosolve; carbitol-based organic solvents such as methyl carbitol, ethyl carbitol, n-propyl carbitol, i-propyl carbitol, n-butyl carbitol, i-butyl carbitol, i-amyl carbitol, carbitol acetate, phenyl carbitol, and benzyl carbitol; glycol ether-based organic solvents such as ethylene glycol dimethyl ether, ethylene glycol diethyl ether, diethylene glycol dimethyl ether, diethylene glycol diethyl ether, diethylene glycol divinyl ether, diethylene glycol ethyl methyl ether, diethylene glycol isopropyl methyl ether, diethylene glycol butyl methyl ether, triethylene glycol dimethyl ether, triethylene glycol divinyl ether, tetraethylene glycol diethyl ether, propylene glycol dimethyl ether, propylene glycol diethyl ether, propylene glycol di-n-propyl ether, propylene glycol diisopropyl ether, propylene glycol di-n-butyl ether, propylene glycol diisobutyl ether, propylene glycol diallyl ether, propylene glycol diphenyl ether, dipropylene glycol dimethyl ether, dipropylene glycol diethyl ether, dipropylene glycol di-n-butyl ether, dipropylene glycol diisobutyl ether, dipropylene glycol diallyl ether, tripropylene glycol dimethyl ether, tripropylene glycol diethyl ether, tripropylene glycol di-n-butyl ether, tripropylene glycol diisobutyl ether, tripropylene glycol diallyl ether, butylene glycol dimethyl ether, butylene glycol diethyl ether, butylene glycol di-n-butyl ether, 2-butoxyethyl diethoxyethyl ether, 2-butoxyethyl triethoxy ether, and 2-butoxyethyl tetraethoxyethyl ether; acetate-based organic solvents such as ethylene glycol monomethyl ether acetate, ethylene glycol monoethyl ether acetate, ethylene glycol mono-n-butyl ether acetate, diethylene glycol monoethyl ether acetate, diethylene glycol mono-n-butyl ether acetate, 3-methoxybutyl acetate, and propylene glycol monomethyl ether acetate; and alcohol-based solvents such as methanol, ethanol, propanol, isopropyl alcohol, butanol, and isobutyl alcohol. These are used singly or two or more of them are used in combination.

<<Preparation method>>

The base agent (A) can be prepared by mixing the above-described components by a method known to those skilled in the art. Examples of the mixing method include a kneading mixing method using a kneader, a roll, or the like, and a dispersion mixing method using a sand grinding mill, a disper, or the like.

<Curing agent (B)>

The curing agent (B) contains a polyisocyanate compound. The polyisocyanate compound reacts with a hydroxy group-containing component (typically, the first and second hydroxy group-containing acrylic resins) to form a crosslinked structure.

<<Polyisocyanate compound>>

The polyisocyanate compound has at least two isocyanate groups in one molecule. Examples of the polyisocyanate compound include aliphatic polyisocyanates, alicyclic polyisocyanates, aliphatic polyisocyanates having an aromatic ring not bonded to an isocyanate group in the molecule (araliphatic polyisocyanates), aromatic polyisocyanates, and derivatives of these polyisocyanates. The examples specifically include aromatic polyisocyanates such as tolylene diisocyanate, 4,4'-diphenylmethane diisocyanate, xylylene diisocyanate, and metaxylylene diisocyanate; aliphatic polyisocyanates such as hexamethylene diisocyanate; alicyclic polyisocyanates such as isophorone diisocyanate; and multimers thereof such as biuret type multimers, nurate type multimers, and adduct type multimers. These are used singly or two or more of them are used in combination.

The equivalent ratio (NCO/OH) of the isocyanate groups contained in the polyisocyanate compound to the hydroxy groups contained in the hydroxy group-containing components may be 0.7 or more and 2.0 or less. When the equivalent ratio (NCO/OH) is within this range, the scratch resistance can be further improved. The equivalent ratio (NCO/OH) may be 0.8 or more. The equivalent ratio (NCO/OH) may be 2.0 or less, may be 1.8 or less, and may be 1.5 or less.

<<Other curing agent>>

The curing agent (B) may further contain, for example, at least one selected from the group consisting of an amino resin, an epoxy compound, an aziridine compound, a carbodiimide compound, and an oxazoline compound as another curing agent. The content of the other curing agent is appropriately set according to the coating film forming components.

<<Solvent>>

The curing agent (B) may contain a solvent having no hydroxy group. Examples of such a solvent include the

glycol ether-based organic solvents recited above; the acetate-based organic solvents recited above; the ketone-based organic solvents recited above; and the ester-based organic solvents recited above. These are used singly or two or more of them are used in combination.

<<Preparation method>>

The curing agent (B) can be prepared by mixing the above-described components by a method known to those skilled in the art. Examples of the mixing method include the same methods as those for the preparation of the base agent (A).

<Additives>

The clear coating composition may contain additives commonly used in the coating material field. The additives are added to at least one of the base agent (A) and the curing agent (B). Examples of the additives include a pigment, an ultraviolet absorber, a hindered amine light stabilizer, an antioxidant, crosslinked resin particles, a leveling agent, an antifoaming agent, a curing accelerator, and a viscosity modifier. In particular, a leveling agent may be contained.

<<Leveling agent>>

The leveling agent is also called a surface conditioning agent, and controls the surface tension of the coating film. As a result, for example, anti-cissing property and film formability are improved. Examples of the leveling agent include an acrylic-silicone copolymer, a silicone compound, an acrylic compound, a vinyl compound, a polyester compound, and a fluorine-containing compound. The leveling agent may be an acrylic-silicone copolymer from the viewpoint of inhibiting a clear coating film surface from becoming excessively easy to slip and not lowering the ease in sanding.

(acrylic-silicone copolymer)

The acrylic-silicone copolymer has a main chain formed of carbon-carbon linkages (-C-C-). The acrylic-silicone copolymer has, for example, a main chain composed of a polymer of (meth)acrylic acid or (meth)acrylic ester and a graft chain containing an organopolysiloxane.

The acrylic-silicone copolymer contains, for example, a structural unit X represented by the following general formula (x):

[Chemical Formula 1]

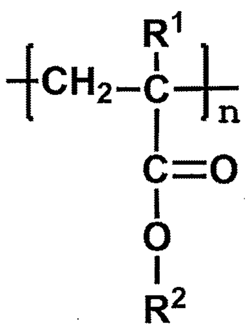

(X)

wherein independently in each structural unit,

- $R^1$ represents a hydrogen atom or a methyl group,
- $R^2$ represents an alkyl group having 1 to 18 carbon atoms,
- n is an integer of 1 or more; and
- a structural unit Y represented by the following general formula (y):

[Chemical Formula 2]

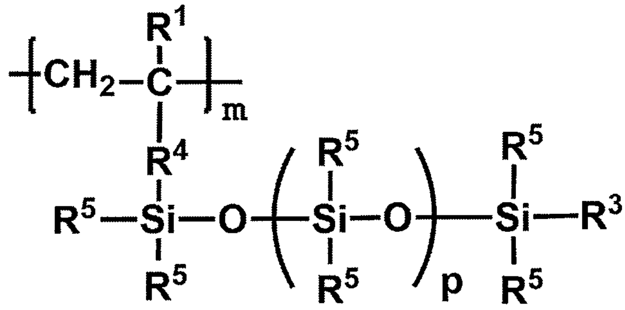

(y)

wherein independently in each structural unit,

$R^1$ represents a hydrogen atom or a methyl group,
$R^3$ represents a hydrogen atom, a hydroxy group, an alkyl group having 1 to 5 carbon atoms, an aryl group having 6 to 10 carbon atoms, or an aralkyl group having 7 to 15 carbon atoms,
$R^4$ represents a hydrogen atom, an oxygen atom or a hydrocarbon group,
$R^5$ represents an alkyl group having 1 to 5 carbon atoms, an aryl group having 6 to 10 carbon atoms, or an aralkyl group having 7 to 15 carbon atoms, and
m and p are each an integer of 1 or more.

$R^1$ may be a methyl group.
$R^5$ may be an alkyl group having 1 to 5 carbon atoms, may be an alkyl group having 1 to 3 carbon atoms, and may be a methyl group.
The acrylic-silicone copolymer may be either a block copolymer or a random copolymer.
The solid content of the acrylic-silicone copolymer may be 0.1 parts by mass or more and 0.5 parts by mass or less based on 100 parts by mass of the total solid content of the base agent (A) and the curing agent (B). As a result, anti-cissing property and film formability can be enhanced without impairing the ease in sanding. The solid content of the acrylic-silicone copolymer may be 0.15 parts by mass or more, and may be 0.2 parts by mass or more. The solid content of the acrylic-silicone copolymer may be 0.45 parts by mass or less, and may be 0.4 parts by mass or less.

(Silicone compound)

The clear coating composition may contain a silicone compound together with the acrylic-silicone copolymer. This facilitates a function as a leveling agent to be more easily exhibited. The silicone compound has a main chain formed of siloxane linkages (-Si-O-).
Examples of the silicone compound include polysiloxane and organic modified polysiloxanes (for example, dimethylpolysiloxane, polysiloxane having polyalkylene oxide as a side chain, and polysiloxane having a long-chain alkyl group as a side chain). Among them, organic modified polysiloxanes may be used from the viewpoint of hardly affecting the appearance of a coating film even when used in combination with the acrylic-silicone copolymer.
The ratio (W3/W4) of the solid content W3 of the acrylic-silicone copolymer to the solid content W4 of the silicone compound may be 99/1 to 80/20. As a result, a function as a leveling agent can be exhibited without impairing the ease in sanding. The ratio (W3/W4) may be 98/2 to 85/15, and may be 97/3 to 90/10.
The two-pack type clear coating composition is prepared using a method commonly used by those skilled in the art. The two-pack type clear coating composition is prepared, for example, by the same method as that for the preparation of the base agent (A).
The clear coating composition according to the present disclosure is suitably used for coating of automobiles because a coating film superior in ease in sanding and scratch resistance can be obtained. Automobiles generally have a multilayer coating film in which an intermediate coating film, a base coating film, and a clear coating film are laminated in this order.

[Method for manufacturing coated article]

A coated article including the clear coating film described above is manufactured, for example, by a method including applying an intermediate coating composition to an article to be coated to form an uncured intermediate coating film, a step of curing the uncured intermediate coating film, applying a base coating composition to form an uncured base

coating film, a step of curing the uncured base coating film, applying a clear coating composition to the base coating film to form an uncured clear coating film, and curing the uncured clear coating film.

When the clear coating film is formed, the intermediate coating film and the base coating film may be either cured or uncured. When the clear coating film is formed, the intermediate coating film may be cured while the base coating film may be uncured. Specifically, the coated article may be manufactured by a method including applying an intermediate coating composition to an article to be coated to form an uncured intermediate coating film, curing the uncured intermediate coating film to form a cured intermediate coating film, sequentially applying a base coating composition and a clear coating composition to the cured intermediate coating film to form an uncured base coating film and an uncured clear coating film in this order, and curing the uncured base coating film and the uncured clear coating film at once.

Hereinafter, each of the steps will be described by taking as an example a case of manufacturing a coated article including a multilayer coating film in which an intermediate coating film, a base coating film, and a clear coating film are laminated in this order by the method described above. However, the method for manufacturing the coated article is not limited thereto.

(I) Step of forming uncured intermediate coating film

The intermediate coating composition is applied to the article to be coated to form the uncured intermediate coating film. The intermediate coating film is interposed between the article to be coated and the base coating film. The intermediate coating film improves adhesion between the base coating film and the article to be coated. When the surface of the article to be coated is not uniform, a uniform coating surface is formed by intermediate coating, and unevenness of the base coating film is easily inhibited.

The thickness of the intermediate coating film after curing may be 15 m or more and 60 μm or less from the viewpoint of the smoothness and the chipping resistance of the coated article. The thickness of the coating film can be measured with an electromagnetic coating thickness meter (for example, SDM-miniR manufactured by SANKO). The thickness of the coating film is an average value of the thicknesses of the coating film at arbitrary five points.

Examples of the applying method include air spray coating, airless spray coating, and rotary atomization coating. These methods may be combined with electrostatic coating. Among them, rotary atomization type electrostatic coating is preferable from the viewpoint of coating efficiency. For the rotary atomization type electrostatic coating, for example, a rotary atomization type electrostatic coating machine commonly called "micro micro bell (μμ bell)", "micro bell (μ bell)", "metallic bell", or the like is used.

After the intermediate coating composition is applied, preliminary drying (also referred to as preheating) may be carried out. Thanks to this, the diluent component contained in the intermediate coating composition is inhibited from bumping in the curing step, so that the occurrence of bubbles is easily controlled. Further, the preliminary drying inhibits the mixing of the uncured intermediate coating film and a base coating composition to be applied thereto, so that a mixed layer is hardly formed. Therefore, the smoothness of a resulting coated article is likely to be improved.

Examples of the preliminary drying include a method in which the item to be dried is left standing for 5 minutes or more and 15 minutes or less under a temperature condition of 20°C or higher and 25°C or lower, and a method in which the item to be dried is heated for 30 seconds or more and 10 minutes or less under a temperature condition of 50°C or higher and 80°C or lower.

(Article to be coated)

Examples of the material of the article to be coated include metal, resin, and glass. The shape of the article to be coated is also not particularly limited. Examples of the article to be coated specifically include automobile bodies such as passenger cars, trucks, motorcycles, and buses, parts for automobile bodies, and automobile parts such as spoilers, bumpers, mirror covers, grilles, and door knobs.

Examples of the metal include iron, copper, aluminum, tin, zinc, and alloys thereof (e.g., steel). Examples of a usable metallic article to be coated typically include steel sheets such as cold-rolled steel sheets, hot-rolled steel sheets, stainless steels, electrogalvanized steel sheets, hot-dip galvanized steel sheets, zinc-aluminum alloy-based plated steel sheets, zinc-iron alloy-based plated steel sheets, zinc-magnesium alloy-based plated steel sheets, zinc-aluminum-magnesium alloy-based plated steel sheets, aluminum-based plated steel sheets, aluminum-silicon alloy-based steel sheets, and tin-based plated steel sheets.

The metallic article to be coated may have been subjected to surface treatment. Examples of the surface treatment include phosphate salt treatment, chromate treatment, zirconium chemical conversion treatment, and composite oxide treatment. The metallic article to be coated may have been further coated with an electrodeposition coating material after the surface treatment. The electrodeposition coating material may be of a cationic type or of an anionic type.

Examples of the resin include polypropylene resin, polycarbonate resin, urethane resin, polyester resin, polystyrene resin, ABS resin, vinyl chloride resin, and polyamide resin. The resin article to be coated preferably has

been subjected to degreasing treatment.

(Intermediate coating composition)

The intermediate coating composition may be either aqueous or solvent-based. The intermediate coating composition contains, for example, polycaprolactone triol, a blocked isocyanate, and a polyester resin. The intermediate coating film formed from such an intermediate coating composition is superior in chipping resistance. The intermediate coating composition may further contain a pigment and various additives.

(II) Curing step

The uncured intermediate coating film is cured. The intermediate coating film can be cured by heating.
The heating conditions are appropriately set according to the composition of the intermediate coating composition, the material of the article to be coated, and so on. The heating temperature is, for example, 60°C or higher and 170°C or lower, and may be 90°C or higher and 150°C or lower.
The heating time may be appropriately set according to the heating temperature. When the heating temperature is 60°C or higher and 170°C or lower, the heating time is, for example, 10 minute or more and 60 minutes or less, and may be 15 minutes or more and 45 minutes or less. The heating time means a time during which the temperature in a heating device reaches a target temperature and the article to be coated is maintained at the target temperature, and the time taken until the temperature reaches the target temperature is not considered. Examples of the heating device include a drying furnace using a heating source such as hot air, electricity, gas, or infrared rays.

(III) Step of forming uncured base coating film

The base coating composition is applied to the cured intermediate coating film to form an uncured base coating film. The base coating film may be a single layer or a laminated coating film having two or more layers.
The thickness of the base coating film is not particularly limited, and is appropriately set according to the purpose. The thickness per layer of the base coating film after curing may be, for example, 5 μm or more and 30 μm or less.
Examples of the applying method include the same methods as the methods of applying the intermediate coating composition.
From the same point of view as described above, preliminary drying may be carried out in the same manner as described above after applying the base coating composition.

(Base coating composition)

The base coating composition may be either aqueous or solvent-based. The base coating composition may be aqueous. The aqueous base coating composition contains, for example, an acrylic resin emulsion, a water-soluble acrylic resin, a curing agent (typically, a melamine resin), and a polyether polyol resin. The base coating film formed from such a base coating composition is superior in appearance. The base coating composition may further contain a pigment and various additives.

(IV) Step of forming uncured clear coating film

The clear coating composition according to the present disclosure is applied to the uncured base coating film to form an uncured clear coating film.
The thickness of the clear coating film after curing may be 15 μm or more and 50 μm or less from the viewpoint of scratch resistance and smoothness.
The applying method is not particularly limited. Examples of the applying method include the same methods as the methods of applying the intermediate coating composition. Among them, rotary atomization type electrostatic coating is preferable from the viewpoint of coating efficiency. After applying the clear coating composition, preliminary drying may be carried out in the same manner as described above.

(V) Curing step

The uncured base coating film and the uncured clear coating film are cured. Each coating film can be cured by heating. In the present embodiment, the base coating film and the clear coating film are cured at once. The heating conditions may be the same as those for the intermediate coating film.

EXAMPLES

Hereafter, the present disclosure will be described in detail by way of examples, but the present disclosure is not limited by the examples at all. In the examples, "parts" and "%" are on a mass basis unless in terms of solid content otherwise indicated.

[Example 1]

A base agent (A) was prepared by mixing 32.6 parts of the first hydroxy group-containing acrylic resin specified below, 22.9 parts of the second hydroxy group-containing acrylic resin a specified below, 9.9 parts of the second hydroxy group-containing acrylic resin b specified below, 0.24 parts of an acrylic-silicone copolymer (leveling agent, DISPARLON NSH-8430HF, manufactured by Kusumoto Chemicals, Ltd.), 0.01 parts of a silicone compound a (leveling agent, POLYFLOW KL-402, manufactured by Kyoeisha Chemical Co., Ltd.), 0.02 parts of a vinyl compound (leveling agent, DISPARLON LHP-90, manufactured by Kusumoto Chemicals, Ltd.), 0.02 parts of a polyester compound (leveling agent), 0.01 parts of an acrylic compound (antifoaming agent, Dynoadd F-1, manufactured by Dynea AS), and an appropriate amount of a nonaqueous solvent (isopropyl alcohol (IPA)). The acrylic-silicone copolymer used has the structural unit X and the structural unit Y described above, and both $R^1$ and $R^5$ are methyl groups.

A curing agent (B) was prepared by mixing 34.7 parts of a polyisocyanate compound (Desmodur N3600, manufactured by Sumika Covestro Urethane Co., Ltd.) and an appropriate amount of a nonaqueous solvent (ethyl 3-ethoxypropionate (EEP)).

Subsequently, a clear coating composition was obtained by mixing the base agent (A), the curing agent (B), and a nonaqueous solvent (EEP).

(First hydroxy group-containing acrylic resin)

Weight average molecular weight: 7700
Tg: 30°C
Hydroxyl value: 110 mg KOH/g

(Second hydroxy group-containing acrylic resin a)

Weight average molecular weight: 8600
Tg: 16°C
Hydroxyl value: 140 mg KOH/g

(Second hydroxy group-containing acrylic resin b)

Weight average molecular weight: 7800
Tg: 10°C
Hydroxyl value: 160 mg KOH/g

[Comparative Example 1]

A base agent (A) was prepared by mixing 46.1 parts of the second hydroxy group-containing acrylic resin a, 19.9 parts of the second hydroxy group-containing acrylic resin b, 0.5 parts of a polycarbonate diol resin (DURANOL™ T5650E, hydroxyl value 225 mg KOH/g, manufactured by Asahi Kasei Corporation), 0.01 parts of a silicone compound b (leveling agent, DOW CORNING TORAY L-7001, manufactured by Dow Corning Toray Co., Ltd.), 0.003 parts of a silicone compound c (leveling agent, DOW CORNING TORAY 8637 ADDITIVE, manufactured by Dow Corning Toray Co., Ltd.), 0.02 parts of a vinyl compound (leveling agent, DISPARLON LHP-90, manufactured by Kusumoto Chemicals, Ltd.), 0.01 parts of an acrylic compound (antifoaming agent, manufactured by Kyoeisha Chemical Co., Ltd., FLOWLEN AC-230), and an appropriate amount of a nonaqueous solvent (EEP).

A curing agent (B) was prepared by mixing 33.6 parts of a polyisocyanate compound (Desmodur N3600,

manufactured by Sumika Covestro Urethane Co., Ltd.), and an appropriate amount of a nonaqueous solvent (EEP).

Subsequently, a clear coating composition was obtained by mixing the base agent (A), the curing agent (B), and a nonaqueous solvent (EEP).

[Evaluation]

A coated article having a multilayer coating film including an intermediate coating film, a base coating film, and the clear coating film described above was prepared, and the following evaluations were carried out. The results of the evaluations are shown in Table 1. Each evaluation was performed for six coated articles having the same configuration, and an average value thereof was used as an evaluation result. The method for preparing the coated article is as follows.

(Preparation of coated article)

An automobile body substrate was prepared as an article to be coated, and wiped with isopropyl alcohol. Subsequently, an intermediate coating composition prepared as described below was applied to the substrate such that the dry film thickness was 35 μm. Thereafter, the coated article was left standing for 5 minutes in an environment at a temperature of 23 ± 5°C and a relative humidity of 68% or less, and then baked in an electric oven at 140°C for 30 minutes.

Next, it was confirmed that the temperature of the article reached 30°C or lower, and then a base coating composition prepared as described below was applied such that the dry film thickness was 15 μm. Thereafter, the coated article was left standing for 3 minutes in an environment at a temperature of 23 ± 5°C and a relative humidity of 68% or less, and then dried in an electric oven at 80°C for 3 minutes.

Subsequently, a clear coating composition immediately after preparation was applied to the uncured base coating film with a spray gun (manufactured by ANEST IWATA Corporation; W-101-134G) such that the dry film thickness was 35 μm. Thereafter, this coated article was left standing for 7 minutes in an environment at a temperature of 23 ± 5°C and a relative humidity of 68% or less, and thus an uncured clear coating film was formed. Then, using a dryer, the substrate having the multilayer coating film was heated at 140°C for 30 minutes, affording a coated article having a multilayer coating film composed of a cured intermediate coating film, a cured base coating film, and a cured clear coating film.

(i) Preparation of intermediate coating composition

An intermediate coating composition was obtained by mixing and stirring 46.25% of polycaprolactone triol (PLACCEL L320AL, manufactured by Daicel Corporation), 19.67% of a blocked isocyanate (Desmodur BL3175, manufactured by Sumika Bayer Urethane Co., Ltd.), 34.08% of a polyester resin X produced as described below, 1.35% of talc (LMR-100, manufactured by Fuji Talc Industrial Co., Ltd.), 6.16% of titanium white (TIPAQUE CR97, manufactured by Ishihara Sangyo Kaisha, Ltd.), 1.17% of carbon black (Carbon Black MA-100, manufactured by Mitsubishi Chemical Corporation), and 28.74% of precipitated barium sulfate (BARTEX OWT, manufactured by TOR MINERALS INTERNATIONAL INC.). The molar ratio (NCO/OH) of NCO groups in the blocked isocyanate to OH groups in the polycaprolactone triol was adjusted to 1.

(i-i) Production of polyester resin X

A reaction vessel equipped with a thermometer, a stirrer, a cooling tube, a nitrogen inlet tube, a water separator, and a fractionating column was charged with 45.5 parts of isophthalic acid, 17.1 parts of adipic acid, 10.0 parts of trimethylolpropane, 35.9 parts of neopentyl glycol, 5.0 parts of glycidyl versatate (CARDURA E, manufactured by Shell), and 0.3 parts of dibutyltin oxide, and the temperature was raised to 210°C. From 160°C to 210°C, the temperature was raised at a constant temperature raising rate over 3 hours. The condensed water generated was distilled out of the system. The mixture was kept at 210°C for 1 hour. Thereafter, 47.8 parts of isobutyl acetate was gradually added as a reflux solvent into the reaction vessel, and the reaction was continued. Thereafter, the reaction vessel was cooled to 150°C, and 11.4 parts of ε-caprolactone was added. The mixture was kept at 150°C for 2 hours, and then cooled to 100°C. As a result, a varnish (solid content: 75%) containing a polyester resin X having a number average molecular weight of 3050, an acid value of 8.0 mg KOH/g, and a hydroxyl value of 92 mg KOH/g was obtained.

(ii) Preparation of base coating composition

160 parts of an acrylic resin emulsion produced as described below, 10 parts of 10% by mass dimethylaminoethanol, 33 parts of a water-soluble acrylic resin produced as described below, 33 parts of a polyester resin produced as described below, 38 parts of a melamine resin (CYMEL 204, manufactured by Mitsui Cytec Ltd., mixed alkylated melamine resin), 10 parts of a polyether polyol resin (GP-1000, manufactured by Sanyo Chemical Industries, Ltd., propylene oxide

adduct of glycerin), 5 parts of a phosphoric acid group-containing acrylic resin, and 0.3 parts of lauryl acid phosphate were mixed. Further, 30 parts of 2-ethylhexanol and 3.3 parts of ADEKA NOL UH-814N (viscosity control agent manufactured by ADEKA CORPORATION) were added and uniformly dispersed, affording a water-borne base coating composition.

(ii-i) Production of acrylic resin emulsion

126.5 parts of deionized water was added to a reaction vessel, and was heated to 80°C while being mixed and stirred in a nitrogen stream. Separately, a monomer emulsion was prepared which was composed of 100 parts of a monomer mixture of 27.61 parts of methyl acrylate, 53.04 parts of ethyl acrylate, 4.00 parts of styrene, 9.28 parts of 2-hydroxyethyl methacrylate, 3.07 parts of methacrylic acid, and 3 parts of allyl methacrylate, 0.7 parts of Aqualon HS-10 (polyoxyethylene alkylpropenylphenyl ether sulfate, manufactured by DKS Co. Ltd.), 0.5 parts of ADEKA REASOAP NE-20 ($\alpha$-[1-[(allyloxy)methyl]-2-(nonylphenoxy)ethyl]-$\omega$-hydroxyoxyethylene, manufactured by ADEKA Corp.), and 80 parts of deionized water. This monomer emulsion and an initiator solution composed of 0.3 parts of ammonium persulfate and 10 parts of deionized water were dropped into the reaction vessel in parallel over 2 hours. After the completion of the dropping, aging was carried out at that temperature for 2 hours. Subsequently, the mixture was cooled to 40°C and filtered through a 400 mesh filter, and then 70 parts of deionized water and 0.32 parts of dimethylaminoethanol were added to adjust to pH 6.5, and thus an acrylic resin emulsion (solid content: 25%) having an average particle size of 150 nm, a solid acid value of 20 mg KOH/g, and a hydroxyl value of 40 mg KOH/g was obtained.

(ii-ii) Production of water-soluble acrylic resin

23.89 parts of tripropylene glycol methyl ether and 16.11 parts of propylene glycol methyl ether were added to a reaction vessel, and the temperature was raised to 105°C while mixing and stirring in a nitrogen stream. Separately, a monomer mixture containing 13.1 parts of methyl methacrylate, 68.4 parts of ethyl acrylate, 11.6 parts of 2-hydroxyethyl methacrylate, and 6.9 parts of methacrylic acid was prepared. 100 parts of this monomer mixture and an initiator solution composed of 10.0 parts of tripropylene glycol methyl ether and 1 part of tert-butyl peroxy-2-ethylhexanoate were dropped into the reaction vessel in parallel over 3 hours. After the completion of the dropping, aging was carried out at that temperature for 0.5 hours.

Furthermore, an initiator solution composed of 5.0 parts of tripropylene glycol methyl ether and 0.3 parts of tert-butyl peroxy-2-ethylhexanoate was dropped into the reaction vessel over 0.5 hours. After the completion of the dropping, aging was carried out at that temperature for 2 hours.

After removing 16.1 parts of the solvent at 110°C under reduced pressure (70 torr) with a desolvating apparatus, 204 parts of deionized water and 7.1 parts of dimethylaminoethanol were added to obtain a water-soluble acrylic resin solution. The water-soluble acrylic resin solution obtained had a solid content of 30%, an acid value of 40 mg KOH/g, and a hydroxyl value of 50 mg KOH/g.

(ii-iii) Production of polyester resin

A reaction vessel equipped with a stirrer, a condenser and a thermometer was charged with 372 parts of dimethylterephthalic acid, 380 parts of dimethylisophthalic acid, 576 parts of 2-methyl-1,3-propanediol, 222 parts of 1,5-pentanediol, and 0.41 parts of tetrabutyl titanate, and a transesterification reaction was performed over 4 hours while raising the temperature from 160°C to 230°C. Subsequently, the system was gradually depressurized and the pressure was reduced to 5 mmHg over 20 minutes, further reduced to a vacuum of 0.3 mmHg or less, and a polycondensation reaction was performed at 260°C for 40 minutes. The mixture was cooled to 220°C in a nitrogen atmosphere, 23 parts of trimellitic anhydride was then added, and a reaction was performed at 220°C for 30 minutes to obtain a polyester resin.

(1) Coefficient of dynamic friction

A coefficient of dynamic friction was obtained by conducting a test under the following conditions using an automatic friction abrasion analyzer "TS-501" manufactured by Kyowa Interface Science Co., Ltd. as a friction meter.

Load: 50 g
Travel distance: 20 mm
Travel speed: 50 mm/s
Point contact parts: steel ball (diameter: 2 mm)

(2) Scratch resistance

A test dust composition composed of 15 g of a test dust (a mixture of seven kinds of dust with a particle size of 27 to 31 μm) and 100 g of water was spread on the platform of a miniature car washing machine. Subsequently, the miniature car washing machine was rotated (at 45 rpm) and reciprocally moved once without running water, and thereby the test dust was caused to adhere onto the car wash brush. Thereafter, a coated article (70 mm x 150 mm) was fixed onto the platform. About 5 g of molding sand was sprinkled onto the coated article. Subsequently, the miniature car washing machine was rotated (at 96 rpm) and then was reciprocally moved three times without running water. Thereafter, the coated article was washed with water, and then was dried.

The initial 20° gloss value of the cured clear coating film was measured using a micro tri-gloss manufactured by BYK.

The 20° gloss value of the coated article after the scratch resistance test was measured in the same manner as described above. An average value of gloss values measured three times at different measurement positions was defined as a gloss value $G_1$ after the test. The ratio (gloss retention rate) of the gloss value $G_1$ after the test to the initial gloss value $G_0$ was calculated in accordance with the following formula.

$$\text{Gloss retention rate (\%)} = 100 \times \text{gloss value } G_1 \text{ after test / initial gloss value } G_0$$

When the gloss retention rate is 80% or more, it can be said that the coated article is superior in scratch resistance.

(3) Ease in sanding

A friction test was carried out using a Gakushin abrasion tester under the conditions of a load of 900 g and the number of reciprocations of 3 times. A water-wetted sanding paper (Trizact diamond wrapping film manufactured by 3M) was attached to the abrading head.

The rubbed part was photographed with a microscope. The image obtained was binarized into a sanded portion and a non-sanded portion by image processing software (image j), and the areal ratio of the sanded portion was calculated. For the binarization, the luminance of the surface of the coating film was used. A portion having a luminance of 125 cd/$m^2$ or more was defined as a sanded portion, and a portion having a luminance of 125 cd/$m^2$ or less was defined as a non-sanded portion.

FIG. 1 is an image (× 200 magnifications) taken after a friction test of a surface of the coating film prepared using the coating material of Example 1. FIG. 2 is an image (× 200 magnifications) taken after a friction test of a surface of the coating film prepared using the coating material of Comparative Example 1.

[Table 1]

<table>
<tr><th colspan="3"></th><th>Example 1</th><th>Comparative Example 1</th></tr>
<tr><td rowspan="11">Base agent (A) (parts by mass)</td><td rowspan="4">Coating film forming component</td><td>First hydroxy group-containing acrylic resin (Hydroxyl value: 110 mg KOH/g)</td><td>32.6</td><td>0</td></tr>
<tr><td>Second hydroxy group-containing acrylic resin a (Hydroxyl value: 140 mg KOH/g)</td><td>22.9</td><td>46.1</td></tr>
<tr><td>Second hydroxy group-containing acrylic resin b (Hydroxyl value: 160 mg KOH/g)</td><td>9.9</td><td>19.9</td></tr>
<tr><td>Polycarbonate diol resin</td><td>0</td><td>0.5</td></tr>
<tr><td rowspan="6">Leveling agent</td><td>Acrylic-silicone polymer</td><td>0.24</td><td>-</td></tr>
<tr><td>Silicone compound a</td><td>0.01</td><td>-</td></tr>
<tr><td>Silicone compound b</td><td>-</td><td>0.01</td></tr>
<tr><td>Silicone compound c</td><td>-</td><td>0.003</td></tr>
<tr><td>Vinyl polymer</td><td>0.02</td><td>0.02</td></tr>
<tr><td>Polyester compound</td><td>0.02</td><td>-</td></tr>
<tr><td>Antifoaming agent</td><td>Acrylic compound</td><td>0.01</td><td>0.01</td></tr>
</table>

(continued)

| | | | Example 1 | Comparative Example 1 |
|---|---|---|---|---|
| Curing agent (B) (parts by mass) | Coating film forming component | Polyisocyanate compound | 34.7 | 33.6 |
| Evaluation | Coefficient of dynamic friction | | 0.38 | 0.27 |
| | Scratch resistance | | 86% | 87% |
| | Ease in sanding | | 35% | 25% |

The present disclosure includes the following embodiments.

[1] A two-pack type clear coating composition comprising a base agent (A) and a curing agent (B), wherein

the base agent (A) contains:

a first hydroxy group-containing acrylic resin having a hydroxyl value of 120 mg KOH/g or less; and

a second hydroxy group-containing acrylic resin having a hydroxyl value of more than 120 mg KOH/g,

the curing agent (B) contains:

an isocyanate compound, and
a coefficient of dynamic friction of a surface of a coating film obtained from the two-pack type clear coating composition is 0.35 or more under a load of 50 g.

[2] The two-pack type clear coating composition according to [1], wherein a ratio (W1/W2) of a content W1 of the first hydroxy group-containing acrylic resin to a content W2 of the second hydroxy group-containing acrylic resin is 70/30 to 30/70.
[3] The two-pack type clear coating composition according to [1] or [2], further comprising an acrylic-silicone copolymer having a main chain formed of carbon-carbon linkages.
[4] The two-pack type clear coating composition according to [3], wherein a content of the acrylic-silicone copolymer is 0.1 parts by mass or more and 0.5 parts by mass or less based on 100 parts by mass of a total solid content of the base agent (A) and the curing agent (B).
[5] The two-pack type clear coating composition according to [3] or [4], further comprising a silicone compound having a main chain formed of siloxane linkages.
[6] The two-pack type clear coating composition according to [5], wherein a ratio (W3/W4) of a content W3 of the acrylic-silicone copolymer to a content W4 of the silicone compound is 99/1 to 80/20.

INDUSTRIAL APPLICABILITY

In accordance with the present invention, there is provided a two-pack type clear coating composition capable of forming a clear coating film that is easily sanded while being superior in scratch resistance. This two-pack type clear coating composition is suitable for coating of automobiles.
This application claims priority based on Japanese Patent Application No. 2022-191984, which was filed in Japan on November 30, 2022, the disclosure of which application is incorporated herein by reference in its entirety.

## Claims

**1.** A two-pack type clear coating composition comprising a base agent (A) and a curing agent (B), wherein

the base agent (A) contains:

a first hydroxy group-containing acrylic resin having a hydroxyl value of 120 mg KOH/g or less; and

a second hydroxy group-containing acrylic resin having a hydroxyl value of more than 120 mg KOH/g,

the curing agent (B) contains:
an isocyanate compound, and
a coefficient of dynamic friction of a surface of a coating film obtained from the two-pack type clear coating composition is 0.35 or more under a load of 50 g.

**2.** The two-pack type clear coating composition according to claim 1, wherein a ratio (W1/W2) of a content W1 of the first hydroxy group-containing acrylic resin to a content W2 of the second hydroxy group-containing acrylic resin is 70/30 to 30/70.

**3.** The two-pack type clear coating composition according to claim 1 or 2, further comprising an acrylic-silicone copolymer having a main chain formed of carbon-carbon linkages.

**4.** The two-pack type clear coating composition according to claim 3, wherein a content of the acrylic-silicone copolymer is 0.1 parts by mass or more and 0.5 parts by mass or less based on 100 parts by mass of a total solid content of the base agent (A) and the curing agent (B).

**5.** The two-pack type clear coating composition according to claim 3 or 4, further comprising a silicone compound having a main chain formed of siloxane linkages.

**6.** The two-pack type clear coating composition according to claim 5, wherein a ratio (W3/W4) of a content W3 of the acrylic-silicone copolymer to a content W4 of the silicone compound is 99/1 to 80/20.

Fig. 1

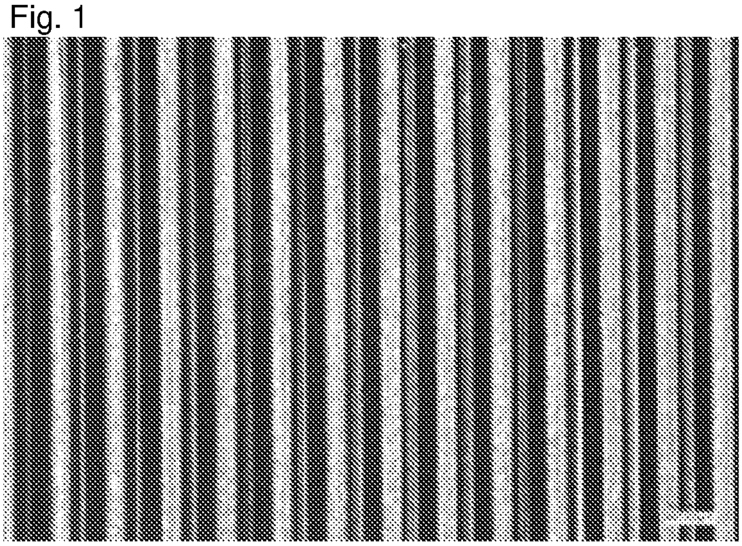

Fig. 2

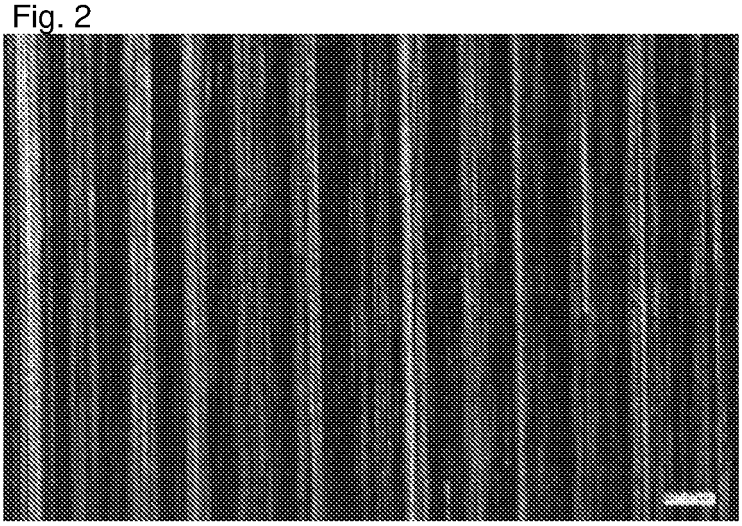

**INTERNATIONAL SEARCH REPORT**

International application No.
**PCT/JP2023/027201**

**A. CLASSIFICATION OF SUBJECT MATTER**

***C09D 133/14***(2006.01)i; ***C09D 7/63***(2018.01)i; ***C09D 7/65***(2018.01)i; ***C09D 175/04***(2006.01)i
FI: C09D133/14; C09D7/63; C09D7/65; C09D175/04

According to International Patent Classification (IPC) or to both national classification and IPC

**B. FIELDS SEARCHED**

Minimum documentation searched (classification system followed by classification symbols)

C09D133/14; C09D7/63; C09D7/65; C09D175/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-079377 A (KANSAI PAINT CO., LTD.) 26 May 2022 (2022-05-26) claims, paragraphs [0001], [0006], [0027], [0028], [0030], [0031], [0044], [0051], [0058], [0059], [0065]-[0067], examples | 1-6 |
| X | JP 2022-075131 A (HONDA MOTOR CO., LTD.) 18 May 2022 (2022-05-18) claims, paragraphs [0001], [0007], [0014]-[0019], [0022]-[0024], [0038], [0041]-[0043], examples | 1-2, 5 |
| X | JP 2004-359824 A (HONDA MOTOR CO., LTD.) 24 December 2004 (2004-12-24) claims, paragraphs [0008], [0040]-[0044], [0058]-[0067], [0071]-[0076], examples | 1-2, 5 |
| X | JP 2006-520841 A (E.I. DUPONT DE NEMOURS AND CO.) 14 September 2006 (2006-09-14) claims, paragraphs [0008], [0016]-[0025], [0039]-[0042], [0049], [0060]-[0067], examples | 1-2, 5 |
| A | JP 2021-130812 A (KANSAI PAINT CO., LTD.) 09 September 2021 (2021-09-09) entire text | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 September 2023** | **03 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/027201**

| Patent document cited in search report | Publication date (day/month/year) | Patent family member(s) | Publication date (day/month/year) |
|---|---|---|---|
| JP 2022-079377 A | 26 May 2022 | US 2023/0015961 A1<br>claims, paragraphs [0001], [0012], [0067]-[0069], [0073], [0074], [0083], [0116]-[0121], [0133]-[0144], examples<br>WO 2021/106902 A1<br>EP 4066948 A1<br>CN 114787297 A | |
| JP 2022-075131 A | 18 May 2022 | (Family: none) | |
| JP 2004-359824 A | 24 December 2004 | US 2005/0009983 A1<br>claims, paragraphs [0007], [0046]-[0050], [0065]-[0074], [0078]-[0083], examples<br>EP 1484349 A2 | |
| JP 2006-520841 A | 14 September 2006 | US 2004/0185263 A1<br>claims, paragraphs [0007], [0015], [0016], [0025]-[0030], [0035], [0040]-[0043], examples<br>WO 2004/085507 A1<br>EP 1606333 A1<br>KR 10-2005-0113234 A | |
| JP 2021-130812 A | 09 September 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4532625 B
- JP 2022191984 A